# EUROPÄISCHE PATENTSCHRIFT

(11) **EP 0 304 785 B1**
(45) Veröffentlichungstag und Bekanntmachung des Hinweises auf die Patenterteilung: **29.09.1993**
(21) Anmeldenummer: 88113326.8
(22) Anmeldetag: 17.08.1988
(51) Int. Cl.: C08L 81/02, C08K 5/10, H01B 3/30

(54) **Polyphenylensulfid-Formmassen mit verbesserten elektrischen Eigenschaften**
Moulding masses of polyphenylene sulfide with electrical properties
Masses à mouler de polyphénylène sulfure avec des propriétés électriques

(30) Priorität: 25.08.1987 DE 3728301
(43) Veröffentlichungstag der Anmeldung: 01.03.1989
(73) Patentinhaber: BAYER AG, 51368 Leverkusen (DE)
(72) Erfinder: Köhler, Karl-Heinz, Dr., D-4150 Krefeld (DE); Wehnert, Wolfgang, Dr., D-4150 Krefeld (DE); Kraft, Klaus, Dr., D-4150 Krefeld (DE); Tresper, Erhard, Dr., D-4150 Krefeld (DE)

(56) Entgegenhaltungen:
- EP-A- 292 275
- EP-A- 0 236 835
- US-A- 4 486 320
- PATENT ABSTRACTS OF JAPAN vol. 7, no. 167 (C-177)(1312) 22 Juli 1983, & JP-A-58 74751
- Römpps Chemie-Lexikon, 8. Auflage, Stuttgart 1981, Franckh'sche Verlagshandlung, Seite 1272

## Beschreibung

Die Erfindung betrifft kristalline, thermoplastische Formmassen aus Polyphenylensulfid (PPS) und aliphatischen gesättigten Carbonsäureestern. Die Formmassen weisen eine erhöhte Kriechstromfestigkeit auf.

Polyphenylensulfide sind aufgrund ihrer thermischen und mechanischen Eigenschaften sowie ihrer guten chemischen Beständigkeit wertvolle Rohstoffe zur Herstellung von Fasern, Folien und Formkörpern. Sie finden insbesondere Anwendung im Elektro- und Elektronik-Sektor, da sie flammfest und dimensionsstabil sind und eine hohe Dauertemperaturbeständigkeit sowie gute elektrische Eigenschaften aufweisen. Die Kriechstromfestigkeit aber ist z.B. gegenüber Polyamid 6, Polyalkylenterephthalat oder Polystyrol, geringer. Daher ist die Anwendung von PPS im Hochspannungsbereich nur beschränkt möglich.

Es ist bekannt, z.B. die Kriechstromfestigkeit von Polyarylensulfiden durch Zusätze von Calciumsulfat zu verbessern (EP-OS 87 145). Die Menge an Calciumsulfat die hierzu nötig ist beeinträchtigt jedoch die mechanischen Eigenschaften der aus dem so modifizierten PPS hergestellten Formkörper.

Es ist daher die Aufgabe der Erfindung bei Polyphenylensulfiden, die gegebenenfalls anorganische und organische Füllstoffe enthalten, deren elektrischen Eigenschaften, z.B. die Kriechstromfestigkeit, zu verbessern, ohne die vorteilhaften mechanischen und thermischen Eigenschaften des Polyphenylensulfids zu beeinträchtigen. Ebenso sollten für die Verarbeitung wichtige Eigenschaften, z.B. die Schmelzefließfähigkeit und die Farbstabilität nicht beeinflußt werden.

Es wurde nun gefunden, daß Polyphenylensulfid eine deutlich höhere Kriechstromfestigkeit aufweist, wenn es 0,08 bis 3 Gew.-%, bezogen auf Polyphenylensulfid und Ester an langkettigen aliphatischen, gesättigten Estern von langkettigen Carbonsäuren enthält. Das so modifizierte PPS hat verbesserte mechanische Eigenschaften und eine erhöhte Schmelzefließfähigkeit.

Das so erfindungsgemäß modifizierte PPS ist unverändert farbhell. Im Gegensatz zu einem Zusatz von Estern mit niedrigem Molekulargewicht ist beim erfindungsgemäß modifizierten Polyphenylensulfid keine Ausdampfungserscheinungen des eingesetzten Polyesters zu beobachten (vgl. US-PS 4 413 083).

Aus der EP-A 236 835 in der Zusatz von Carbonsäureestern zu Polyphenylensulfiden zur Erhöhung des Kristallinität bekannt. Auf Kriechstromfestigkeit der Massen wird nicht hingewiesen.

Gegenstand der Erfindung sind daher thermoplastisch verarbeitbare Formmassen aus:
a) 27 bis 99,92 Gew.-%, vorzugsweise 29 bis 99,9 Gew.-%, bezogen auf die Summe aus a) + b) eines Polyphenylensulfids mit einer Schmelzviskosität von mindestens 2 bis 10⁷ Pa.s (gemessen bei 306°C und einem Schergefälle von 10³ sec⁻¹) und
b) 0,08 bis 3 Gew.-%, vorzugsweise 0,1 bis 1 Gew.-%, bezogen auf die Summe aus a) + b) + c) eines oder mehrerer aliphatischen, gesättigten Esters einer langkettigen Carbonsäure und eines langkettigen Alkohols oder eines kurzkettigen Polyalkohols der Formeln (I) und (II) 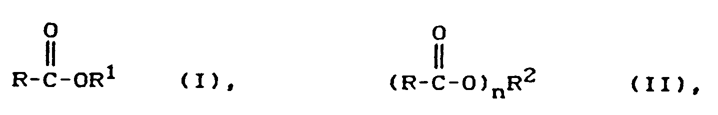 in welchen
   - n: für die Zahl 2, 3 steht,
   - R: für C₂₂-C₃₆-Alkyl,
   - R¹: für C₁₈-C₃₄-Alkyl und
   - R²: für C₂-C₈ Aliphatisch bzw. einen Rest der Formel (III) 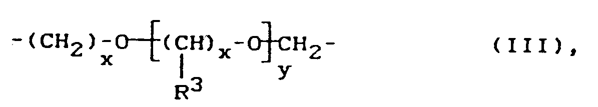 in welcher
   - x: für die Zahl 1, 2, 3 oder 4 steht,
   - y: für eine ganze Zahl von 2 bis 20 steht,
   - R³: für C₁-C₄-Alkyl und Wasserstoff (H) steht,
   wobei für den Fall, daß in Formel (II) n für die Zahl 3 steht, R² für C₂-C₈-Alkin steht und wobei die Ester der Formeln 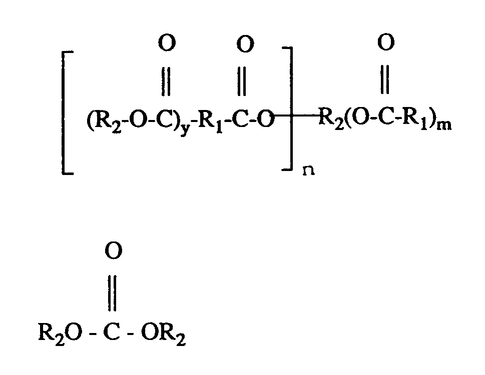 in welchen
   - R₁: für gleiche oder unterschiedliche Reste einer linearen oder verzweigten C₁-C₂₅-aliphatischen, cycloaliphatischen, C₁₀-₂₄-aromatischen oder C₇-C₂₄-araliphatischen Carbonsäure steht,
   - R₂: für gleiche oder unterschiedliche Reste eines linearen oder verzweigten aliphatischen, cycloaliphatischen, araliphatischen oder aromatischen Alkohols mit 1 bis 20, vorzugsweise 5 bis 15 C-Atomen steht,
   - m: für die Zahl 0,1,2,3 oder 4 steht,
   - n: für die Zahl 1 steht, wenn m für die Zahl O steht,für die Zahl O steht, wenn m für die Zahl 1,2,3 oder 4 steht,
   - y: für die Zahl 1,2 oder 3 steht, ausgenommen sind
   und gegebenenfalls
c) 0 bis 70 Gew.-%, bezogen auf die Summe a) + b) + c) an anorganischen Füll- und Verstärkungsstoffen.

Das erfindungsgemäß modifizierte PPS kann auf übliche Weise zu Formmassen verarbeitet werden. So können z.B. die Komponenten a) und b) und gegebenenfalls c) z.B. in der Schmelze, in einem Extruder oder Kneter vermischt und homogenisiert werden.

Die erfindungsgemäß eingesetzten Polyphenylensulfide sind bekannt (z.B. US-PS 33 54 129, EP-OS 171 021). Bevorzugte Polyarylensulfide sind lineare, unverzweigte Polyphenylensulfide mit einer Schmelzviskosität (306°C, 10³ sec⁻¹) von 5 bis 1000 Pa.s, besonders bevorzugt von 20 bis 700 Pa.s.
wobei für den Fall, daß in Formel (II) n für die Zahl 3 steht,R² für C₂-C₈-Alkin steht und für den Fall, daß in Formel (II) n für die Zahl 4 steht,R² für -CH₂-C(CH₃)₂-(Isopentylen) steht.

Die erfindungsgemäß eingesetzten Ester können z.B. Montan-Wachs-Ester sein, die aus natürlich vorkommendem Montan-Wachs gewonnen werden (z.B. "Kirk-Othmer, Enzyclopedia of Chemical Technologie", 3. Auflage 1981, Band 14, S. 340 ff und Band 24, S. 471 ff, sowie "Ullmann, Encyclopädie der technischen Chemie", 4. Auflage 1983, Band 24, S. 16 bis 20).

Montan-Wachs-Ester sind Ester aus überwiegend geradzahligen C₂₂ bis C₃₆-n-Alkansäuren und C₁₈ bis C₃₄-n-Alkanolen (Wachs-Alkoholen), wobei die Säure- und die Alkoholkomponenten Gemische der jeweiligen Homologen sein können.

Erfindungsgemäß eingesetzte Ester der Formel (II) sind z.B. Ester von Montansäuren (C₂₂ bis C₃₆-n-Alkansäuren) mit aliphatischen Polyhydroxyverbindungen die zum Teil käuflich sind (z.B. Hoechst-Wachs E®) wie Ethylen-, Diethylen-, Polyethylenglykol, Propandiol-1,2, Propandiol-1,3, Butandiol-1,4, Hexandiol-1,6, 2-Ethylhexandiol-1,3, Glycerin, Trimethylolpropan. Sie können z.B. nach bekannten Methoden der Veresterung von Alkoholen und Säuren (z.B. "Houben-Weyl, Methoden der organischen Chemie", 4. Auflage, 1985, Band E 5. S. 656 bis 715) hergestellt werden.

Die erfindungsgemäß eingesetzten Ester können Gemische aus Verbindungen der Formel (I) und Formel (II) sein. Bevorzugt eingesetzte Ester sind Ester von C₂₂ bis C₃₆-n-Alkansäuren mit mehrwertigen Alkoholen. Die Säurekomponenten sind vorzugsweise Gemische aus verschiedenen Alkansäure.

Die erfindungsgemäßen Formmassen können neben den Komponenten a) und b) übliche Füll- bzw. Verstärkungsstoffe c) enthalten, z.B. Glasfasern, Kohlefasern, Aramidfasern und faserige anorganische Mineralien, wie Glasmatten usw.

Beispiele für Füllstoffe sind Mineralien, z.B. Quarzmehl, Talkum, Kreide, Glimmer, Titandioxid, Zinksulfid, Calciumsulfat, Kaolin usw. Bevorzugte Verstärkungsstoffe sind Glasfasern, bevorzugte Füllstoffe sind Quarz, Talkum, Kaolin.

Weiterhin können die erfindungsgemäßen Formmassen übliche Verarbeitungshilfsmittel und Farbmittel enthalten.

Die erfindungsgemäßen Formmassen eignen sich für Anwendungen im Elektro- und Elektronikbereich, in denen neben hoher Temperatur- und Chemikalienbeständigkeit sowie Flammfestigkeit, eine hohe Kriechstromfestigkeit gefordert ist. Sie zeichnen sich weiterhin aus durch eine gute Entformbarkeit im Spritzguß und durch gute Formteiloberflächen.

### Beispiele

### Eingesetzte Komponenten

A. Polyphenylensulfid mit einer Schmelzviskosität von 55 Pa.s (gemessen bei 306°C in einem Schergefälle von 1000 sec⁻¹)
B. Ethylenglykol-bis-C-36-Alkanester
C. geschlichtete 6 mm-Glasfasern mit einem Faserdurchmesser von ca. 10 µm
D. Talkum, Teilchendurchmesser: 50 % < 3 µm.

### Herstellung der Formmassen

Die erfindungsgemäßen Formmassen wurden durch Mischen und Homogenisieren der Komponenten in der Schmelze bei ca. 300 bis 320°C Massetemperatur auf einer Zweiwellenschnecke ZSK 32 (Werner & Pfleiderer) hergestellt. Das getrocknete Stranggranulat wurde auf üblichen Spritzgußmaschinen zu Normprüfkörpern verarbeitet, die nach DIN- und ASTM-Normen geprüft werden (s.u.).

**Tabelle**

| Beispiel | Komponenten (Gew.-%) | | | | CTI (V) | δ_{bB} (MPa) | aₙ (kJ/m²) |
|---|---|---|---|---|---|---|---|
| | A | B | C | D | | | |
| Vergleich | 40 | - | 30 | 30 | 150 | 188 | 15 |
| I | 39,75 | 0,25 | 30 | 30 | 200 | 193 | 17 |
| II | 39,50 | 0,50 | 30 | 30 | 225 (IEC 112) | 185 (DIN 53452) | 15 (ISO 180) |

## Patentansprüche

1. Polyphenylensulfid-Formmassen aus:
a) 27 bis 99,92 Gew.-%, vorzugsweise 29 bis 99,9 Gew.-%, bezogen auf die Summe aus a) + b) + c) eines Polyphenylensulfids mit einer Schmelzviskosität von mindestens 2 bis 10⁷ Pa.s (gemessen bei 306°C und einem Schergefälle von 10³ sec⁻¹) und
b) 0,08 bis 3 Gew.-%, vorzugsweise 0,1 bis 1 Gew.-%, bezogen auf die Summe aus a) + b) + c) eines oder mehrerer aliphatischen, gesättigten Esters einer langkettigen Carbonsäure und eines langkettigen Alkohols oder eines kurzkettigen Polyalkohols der Formeln (I) und (II) 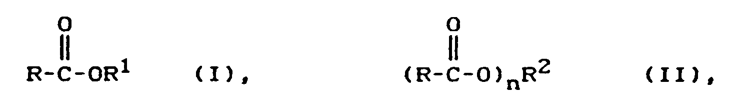 in welchen
n für die Zahl 2, 3 steht,
R für C₂₂-C₃₆-Alkyl,
R¹ für C₁₈-C₃₄-Alkyl und
R² für C₂-C₈-Aliphatisch bzw. einen Rest der Formel (III) 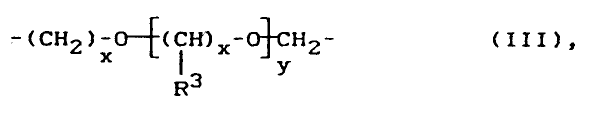 in welcher
x für die Zahl 1, 2, 3 oder 4 steht,
y für eine ganze Zahl von 2 bis 20 steht,
R³ für C₁-C₄-Alkyl und Wasserstoff (H) steht,
wobei für den Fall, daß in Formel (II) n für die Zahl 3 steht, R² für C₂-C₈-Alkin steht und wobei die Ester der Formeln 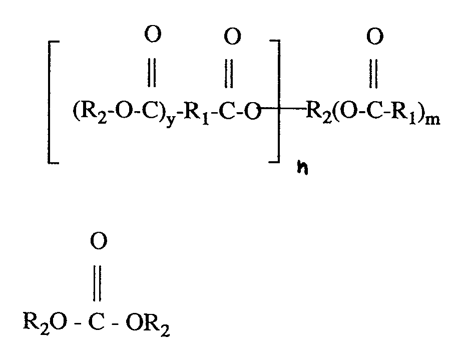 in welchen
R₁ für gleiche oder unterschiedliche Reste einer linearen oder verzweigten C₁-C₂₅-aliphatischen, cycloaliphatischen, C₁₀-₂₄-aromatischen oder C₇-C₂₄-araliphatischen Carbonsäure steht,
R₂ für gleiche oder unterschiedliche Reste eines linearen oder verzweigten aliphatischen, cycloaliphatischen, araliphatischen oder aromatischen Alkohols mit 1 bis 20, vorzugsweise 5 bis 15 C-Atomen steht,
m für die Zahl 0,1,2,3 oder 4 steht,
n für die Zahl 1 steht, wenn m für die Zahl O steht,für die Zahl O steht, wenn m für die Zahl 1,2,3 oder 4 steht,
y für die Zahl 1,2 oder 3 steht, ausgenommen sind
und
c) 0 bis 70 Gew.-%, bezogen auf die Summe a) + b) + c) an anorganischen Füll- und Verstärkungsstoffen.

2. Polyphenylensulfid-Formmassen nach Anspruch 1, dadurch gekennzeichnet, daß das Polyphenylensulfid eine Schmelzviskosität von 5 bis 1000 Pa.s besitzt.

3. Verwendung von Formmassen nach Anspruch 1 zur Herstellung von elektrischen und elektronischen Bauteilen.

## Claims

1. Polyphenylene sulfide moulding compounds of
a) 27 to 99.92% by weight and preferably 29 to 99.9% by weight, based on the sum of a) + b) + c), of a polyphenylene sulfide having a melt viscosity of at least 2 to 10⁷ Pa.s (as measured at 306°C and at a shear rate of 10³ sec⁻¹) and
b) 0.08 to 3% by weight and preferably 0.1 to 1% by weight, based on the sum of a) + b) + c), of one or more aliphatic saturated esters of a long-chain carboxylic acid and a long-chain alcohol or a short-chain polyalcohol corresponding to formulae (I) and (II) 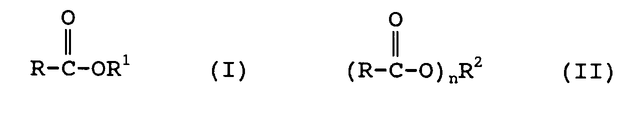 in which
n is the number 2, 3,
R is C₂₂₋₃₆ alkyl,
R¹ is C₁₈₋₃₄ alkyl and
R² is C₂₋₈ aliphatic or a group corresponding to formula (III) 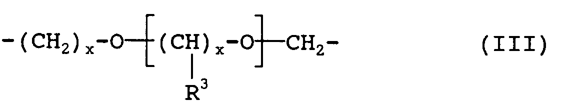 in which
x is the number 1, 2, 3 or 4,
y is an integer of 2 to 20,
R³ is C₁₋₄ alkyl and hydrogen (H);
R² being C₂₋₈ alkine where n is formula (II) has a value of 3 and esters corresponding to the formulae 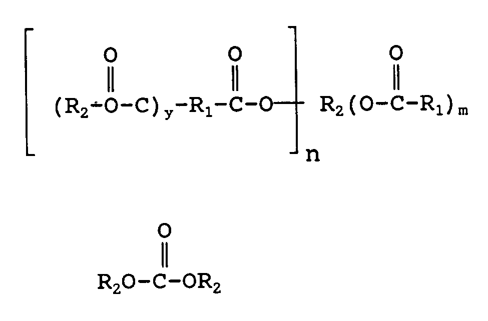 in which
the R₁'s may be the same or different and represent a linear or branched C₁₋₂₅ aliphatic, cycloaliphatic, C₁₀₋₂₄ aromatic or C₇₋₂₄ araliphatic carboxylic acid,
the R₂ʼs may be the same or different and represent a linear or branched alipahtic, cycloaliphatic, araliphatic or aromatic alcohol containing 1 to 20 and preferably 5 to 15 carbon atoms,
m is the number 0, 1, 2, 3 or 4,
n is the number 1 where m = 0 and the number 0 where m = 1, 2, 3 or 4,
y is the number 1, 2 or 3,
being excluded
and
c) 0 to 70% by weight, based on the sum of a) + b) + c), of inorganc fillers and reinforcing materials.

2. Polyphenylene sulfide moulding compounds as claimed in claim 1, characterized in that the polyphenylene sulfide has a melt viscosity of 5 to 1,000 Pa.s.

3. The use of the moulding compounds claimed in claim 1 for the production of electrical and electronic components.

## Revendications

1. Matières à mouler en sulfure de polyphénylène, consistant en :
a) 27 à 99,92% en poids, de préférence 29 à 99,9% en poids, par rapport à la somme de a), b) et c), d'un sulfure de polyphénylène dont la viscosité à l'état fondu est d'au moins 2 à 10⁷ Pa.s (mesure à 306°C à une vitesse de cisaillement de 10³ s⁻¹), et
b) 0,08 à 3% en poids, de préférence 0,1 à 1% en poids, par rapport à la somme de a), b) et c) d'un ou plusieurs esters aliphatiques saturés d'acides carboxyliques à longue chaîne et d'alcools à longue chaîne ou de polyalcools à chaîne courte, de formules (I) et (II) : 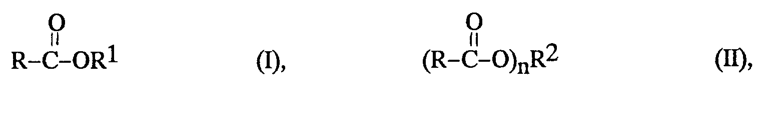 dans lesquelles
n est égal à 2 ou 3,
R représente un groupe alkyle en C₂₂-C₃₆,
R¹ représente un groupe alkyle en C₁₈-C₃₄, et
R² représente un radical aliphatique en C₂-C₈ ou un radical de formule (III) 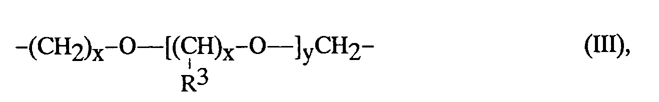 dans laquelle
x est égal à 1,2,3 ou 4,
y est un nombre entier allant de 2 à 20,
R³ représente un groupe alkyle en C₁-C₄ ou l'hydrogène (H), sous réserve que dans le cas où n de la formule (II) est égal à 3, R² représente un groupe alcyne en C₂-C₈, et que les esters de formules : 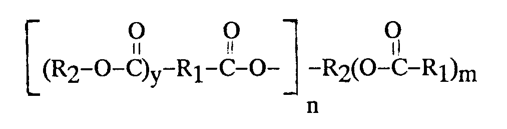 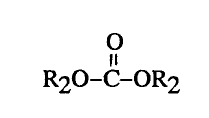 dans lesquelles
les symboles R₁ représentent des radicaux identiques ou différents d'acides carboxyliques aliphatiques linéaires ou ramifiés en C₁-C₂₅, cycloaliphatiques, aromatiques en C₁₀-C₂₄ ou araliphatiques en C₇-C₂₄,
les symboles R₂ représentent des radicaux identiques ou différents d'alcools aliphatiques linéaires ou ramifiés, cycloaliphatiques, araliphatiques ou aromatiques en C₁-C₂₀, de préférence en C₅-C₁₅,
m est égal à 0, 1, 2, 3 ou 4,
n est égal à 1 lorsque m est égal à 0 et égal à 0 lorsque m est égal à 1, 2, 3 ou 4,
y est égal à 1, 2 ou 3,
sont exclus,
et
c) de 0 à 70% en poids, par rapport à la somme de a), b) et c), de matières de charge et matières renforçantes minérales.

2. Matières à mouler en sulfure de polyphénylène selon la revendication 1, caractérisées en ce que le sulfure de polyphénylène a une viscosité à l'état fondu de 5 à 1 000 Pa.s.

3. Utilisation des matières à mouler selon la revendication 1, pour la fabrication de pièces de construction électriques et électroniques.
